# EUROPEAN PATENT SPECIFICATION

(11) **EP 3 202 723 B1**
(45) Date of publication and mention of the grant of the patent: **21.08.2019**
(21) Application number: 16153924.2
(22) Date of filing: 02.02.2016
(51) Int. Cl.: C03B 35/06, B65G 19/02, B65G 47/31, B65G 47/84, B65G 47/86, C03B 35/08

(54) **A TRANSFER UNIT FOR HOLLOW GLASS ARTICLES**
ÜBERTRAGUNGSEINHEIT FÜR HOHLGLASARTIKEL
UNITÉ DE TRANSFERT D'ARTICLES EN VERRE CREUX

(43) Date of publication of application: 09.08.2017
(73) Proprietor: BDF Industries S.P.A., 36100 Vicenza (IT)
(72) Inventor: DALLA FONTANA, Oscar, 36100 Vicenza (IT)
(74) Representative: De Bonis, Paolo

(56) References cited:
- EP-A1- 2 960 217
- US-A- 2 921 664
- US-A- 5 501 316

## Description

### Field of the invention

The present invention relates to transfer units for hollow glass articles that operate in a hollow glass forming facility. More precisely, the invention has been developed with reference to transfer units configured for transferring hollow glass articles from a first conveyor (commonly referred to as "conveyor") to a second conveyor (commonly referred to as "cross conveyor"). Prior art transfer units are known, e.g. from US 5,501,316, EP 2 960 217 A1, and US 2,921,664.

### Prior art in general and technical problem

In hollow glass forming facilities, downstream of each glass forming machine a first conveyor (conveyor) is arranged that carries hollow glass articles coming out of a forming unit of the forming machine towards a second conveyor (cross conveyor). The latter has an incident orientation, typically orthogonal, with respect to the first conveyor and conveys the articles to the inlet of an annealing furnace into which the residual internal stresses resulting from the hot forming of the glass in the machine are relieved. Furthermore, in the reference applications the second conveyor has a feeding speed which is lower than that the first conveyor.

The transfer of articles of the forming machine to the annealing furnace thus envisages to displace the articles from the first conveyor to the second conveyor, thereby coping with both a change in the feeding direction, and a reduction in speed of the articles.

This entails the necessity, during the transfer of the articles, to impart a deceleration thereto that reduces the speed to values equal to or anyway compatible with those of the speed of the second conveyor, as well as a series of centripetal actions to change the direction of motion of the articles thereby aligning the latter to that of the second conveyor.

A first known solution envisages to set between the first and the second conveyor a transfer mechanism comprised of a chain conveyor (so called transfer). Such a mechanism includes a chain driven by a motored pinion on which the latter engages, and wound on a plurality of gear wheels to form a closed path, wherein a branch of the path has a geometry defining a connecting trajectory between the directions of motion of the first conveyor and the second conveyor.

However, owing to the difference in speed of the two conveyors, to the variation in direction and the accelerations that arise along the joining trajectory, the hollow glass articles are prone to disengagement from the chain conveyor, particularly from compartments defined by pairs of subsequent blades mounted on the chain.

For this reason, the known solution in point envisages to use one or more intermediate belt conveyors having a direction of motion parallel to the first conveyor (thus incident to the curvilinear connecting trajectory defined by the transfer mechanism, with a direction that goes to the transfer mechanism itself), so as to guarantee that the articles stay into the respective seats.

This however leads to a remarkable complication of the facility, as well as to a multiplication of belt conveyors (one or more of which having the sole function of maintaining the trajectory imparted to the hollow glass articles by the transfer mechanism), with subsequent increase in the building and maintenance costs of the facility itself.

Furthermore, this solution generally results in a connecting trajectory with a curvature radius which is rather small, with subsequent higher accelerations and stresses on the newly formed articles.

### Object of the invention

The object of the present invention is that of overcoming the previously mentioned technical problems. Particularly, the object of the invention is that of providing a transfer unit for hollow glass articles configured to transfer hollow glass articles from a first conveyor to a second conveyor having feeding directions which are incident to one another and different feeding speeds, that allows to eliminate the resort to auxiliary devices for maintaining the connection trajectory (such as for example the projector keeper referred to known solution described above), and that allows also to operate with connection trajectories having a larger radius or in general adjustable according to the needs.

### Summary of the invention

The object of the present invention is achieved by a transferring unit for hollow glass articles having the features forming the subject of one or more of the appended claims, which form an integral part of the technical disclosure herein provided in relation to the invention.

In particular, the object of the invention is achieved by a transfer unit for hollow glass articles from a first conveyor having a first feeding direction and a first feeding speed to a second conveyor having a second feeding direction and the second feeding speed, wherein the first feeding direction and the second feeding direction are incident to one another, preferably orthogonal, and the second feeding speed is lower than the first feeding speed, the unit including:
- a first diverter mechanism configured to receive a plurality of hollow glass articles from said first conveyor and to feed said hollow glass articles along a first curvilinear trajectory that provides a first deviation of said hollow glass articles, said first diverter mechanism having, during use, a third feeding speed which is lower than said first feeding speed,
- a second diverter mechanism configured to feed said plurality of hollow glass articles along a second curvilinear trajectory that provides a second deviation of said hollow glass articles and to feed said plurality of hollow glass articles to the inlet of said second conveyor, said second diverter mechanism having, in use, a fourth feeding speed,
- a connection mechanism configured to feed said plurality of hollow glass articles from said first diverter mechanism to said second diverter mechanism along a joining trajectory that connects said first curvilinear trajectory to said second curvilinear trajectory thereby enabling, during operation of the unit, a transfer of said plurality of hollow glass articles from said first diverter mechanism to said second diverter mechanism, said connection mechanism having, in use, a fifth feeding speed,
wherein furthermore:
- the fourth feeding speed is lower than the fifth feeding speed,
- the fifth feeding speed is lower or equal to the third feeding speed.

### Brief description of the figures

The invention will now be described with reference to the attached figures, provided purely by way of non limiting example, wherein:
- figure 1 is a perspective view of a transfer unit according to the invention,
- figure 2 is a plan view of the unit of figure 1.

### Detailed description

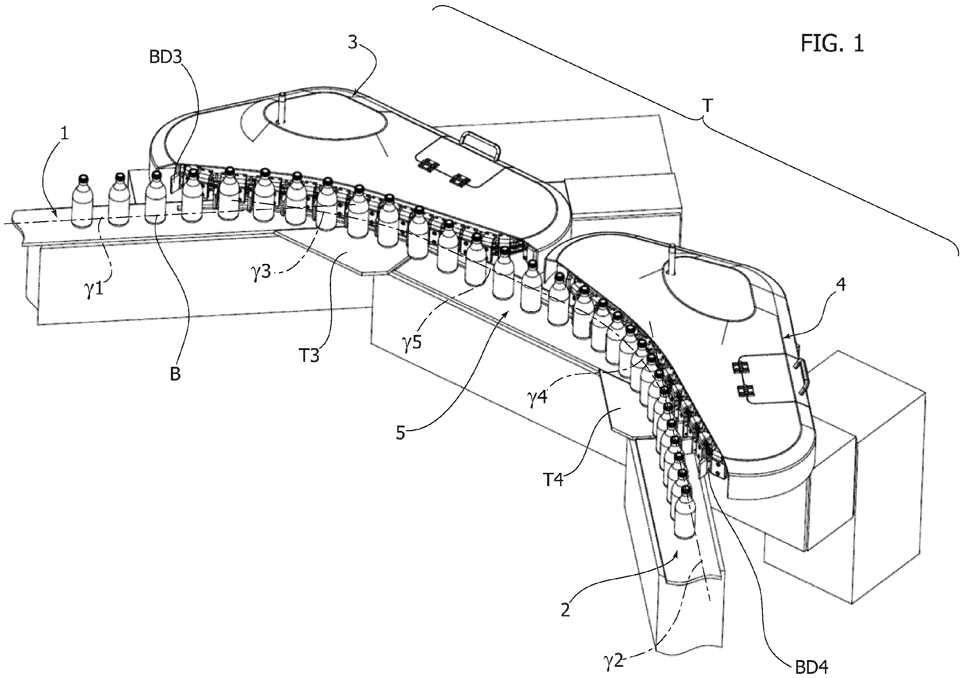

Reference T in figure 1 indicates as a whole a transfer unit for hollow glass articles according to the invention.

The unit T is configured for transferring hollow glass articles from the first conveyor 1, or upstream conveyor (so-called "conveyor") to a second conveyor 2, or downstream conveyor (so-called "cross conveyor").

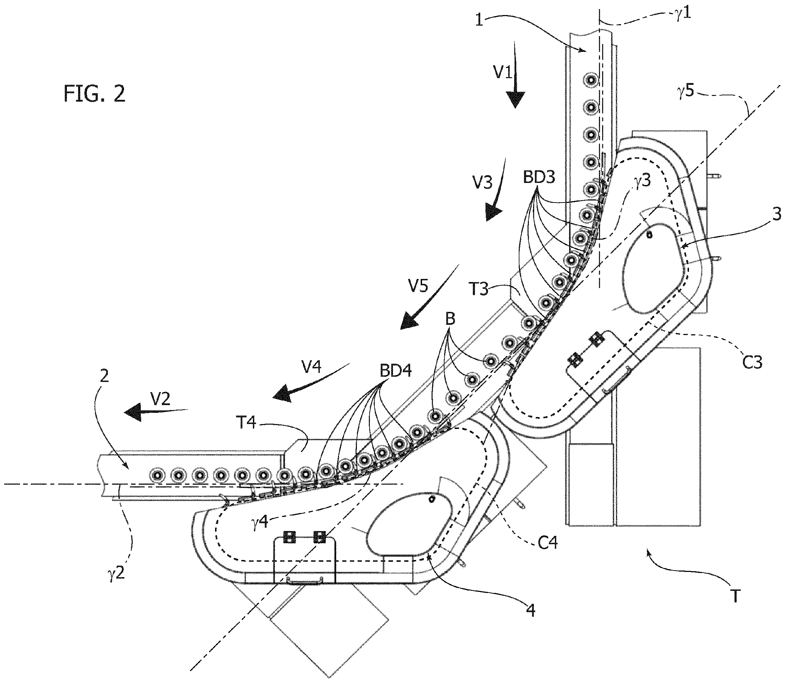

The first conveyor 1 and the second conveyor 2 each have a feeding direction of the hollow glass articles, more in particular bottles B, identified respectively by the directions γ1 and γ2 in figure 2, which are orthogonal to one another. Generally it should be noted that the directions γ1 and γ2 are incident to one another, without necessarily being orthogonal.

Furthermore, the feeding speeds of each conveyor 1, 2 are identified by the arrows V1 and V2 (that identify both the direction and the pointing of the speed) in figure 2, and the magnitude of the feeding speed V1 is higher than the magnitude of the feeding speed V2 (that is, the speed V1 is higher than the speed V2).

In order to transfer the articles B from the conveyor 1 to the conveyor 2 the unit T includes a first diverter mechanism 3, a second diverter mechanism 4 and a connection mechanism 5, which will be now described in detail.

The first diverter mechanism 3 is preferably a chain conveyor including a chain C3 driven by means of a motored pinion on which disengaged, and wound on a plurality of gear wheels (all having a vertical axes and parallel to the axes of the motored pinion, also vertical) to form a closed path.

A portion of the closed path of the chain C3 has a geometry defining a first curvilinear trajectory γ3 that intersects the direction γ1. Around the trajectory γ3 which provides a first deviation of the path of the bottles B, the latter move when the diverter mechanism 3 is in action. To this end, on the chain of the mechanism 3 a plurality of blades BD3 are mounted arranged even displaced with respect to each other and defining -in pairs- compartments into which each bottle B (or similar hollow glass article being output from the forming machine) finds accommodation. Each bade BD3 is configured to drag a corresponding bottle B thereby enabling the feeding by means of the mechanism 3.

In some embodiments, the trajectory γ3 may be chosen so as to result tangent to the trajectory γ1 instead of being simply incident. Furthermore, it may have a constant curvature radius or a variable curvature radius (in both cases, i.e. both when it is tangent to the trajectory γ1, and when it is incident to the trajectory γ1).

The second diverter mechanism 4 is preferably identical to the first diverter mechanism 3 and is thereby preferably a chain conveyor including a chain C4 driven by means of a motored pinion on which it is engaged, and wound on a plurality of gear wheels (all having vertical axes parallel to the axes of the motored pinion, also vertical) to form a closed path.

A portion of the closed path of the chain C4 has a geometry defining a second curvilinear trajectory γ4 that intersects the direction γ2. Along the trajectory γ4, which provides a second deviation of the path of the bottles B, the latter move when the diverter mechanism 4 is in action. To this end, on the chain of a mechanism 4 a plurality of blades BD4 are mounted arranged evenly spaced with respect to each other and defining -in pairs- compartments into which each bottle B (or similar hollow glass article that goes towards the annealing furnace) finds accommodation. Each blade BD4 is configured to drag a corresponding bottle B thereby enabling the feeding thereof by the mechanism 4. It should be observed that, owing to the necessity of imparting a decrease to the feeding speed of the conveyor 2, the blades BD4 are arranged with shorter spacing with respect to the blades BD3.

In some embodiments, the trajectory γ4 may be chosen so as to result tangent to the trajectory γ2, instead of being simply incident. Furthermore, it may have a constant curvature radius or a variable curvature radius (in both cases, both when it is tangent to the trajectory γ2, and when it is incident to the trajectory γ2). It is furthermore possible to have embodiments corresponding to all the possible combinations of the relative positions between trajectory γ4 and γ2, and relative positions between the trajectory γ3 and γ1.

The connection mechanism 5 is configured to receive the plurality of bottles B from the first diverter mechanism 3 and to release the plurality of bottles B to the second diverter mechanism 4. In particular, the connection mechanism 5 is configured to feed the plurality of bottles B along a third trajectory γ5, or a connection trajectory, that connects the first curvilinear trajectory γ3 to the second curvilinear trajectory γ4 thereby enabling, during the operation of the unit 1, a transfer of the hollow glass articles B from the first diverter mechanism 3 to the second diverter mechanism 4.

In a preferred embodiment such as that being the subject of figures 1 and 2, the trajectory γ5 is tangent to the first curvilinear trajectory γ3 and to the second curvilinear trajectory γ4. To this end, the connection mechanism 5 is provided as a belt conveyor having horizontal axes of rotation, that is, a conveyor substantially similar to the conveyors 1 and 2.

In other embodiments, the connection trajectory γ5 is instead simply incident to the trajectories γ3 and γ4, or tangent to a single one thereof and incident with respect to the other (two combinations available: tangent to γ3 and incident to γ4, tangent to γ4 and incident to y3).

Whatever the embodiment considered, the trajectory γ5 may be both a rectilinear trajectory as that illustrated in figures 1 and 2, and a curvilinear trajectory having a constant or variable curvature. In the latter cases, it is envisaged to provide the mechanism 5, for example, as a further chain conveyor similar to the mechanism 3 and 4. Whatever the chosen geometry for the trajectory γ5, that will anyway be chosen as tangent to the trajectory γ3 and γ4.

It will be furthermore appreciated that the path of the bottles B is defined by the envelope of the trajectories γ1, γ2, γ3, γ4, γ5 and determines a condition according to which at least a portion of the path along the trajectories γ3 and γ4 is not in an overlapping condition with either the conveyor 1 (for the mechanism 3: it occurs in proximity of the conveyor 1), or with the conveyor 2 (for the mechanism 4: it occurs in proximity of the conveyor 2), or with the mechanism 5 (for both the mechanisms 3 and 4). In order to avoid a downfall of the articles, the transfer unit T includes a first and a second sliding tables T3, T4, the former arranged in correspondence of the non overlapping portion along the trajectory γ3, the latter arranged in correspondence of the non overlapping portion of the trajectory γ4.

Figure 2 then illustrates, identified by the references V1, V2, V3, V4, V5 (the number is referred to the mechanism/conveyor), the speeds of the bottles B along each portion (trajectories γ1, γ2, γ3, γ4, γ5).

During operation, the bottles B that are output by the hollow glass articles forming machine are fed by means of the conveyor 1. The bottles move with a feeding speed V1 that is higher than the feeding speed V2 at which they will have to exit to move to the inlet of the annealing station.

The reception of the bottles B by the first diverter mechanism 3 determines a feeding thereof with a first gradual deviation along the trajectory γ3, that brings the bottles from a condition of advancement along the trajectory γ1 to a condition of advancement along the trajectory γ5, which the trajectory γ3 serving as connecting trajectory.

At the same time, the feeding along the trajectory γ3 is associated to a first reduction in the feeding speed from the speed V1 to the speed V3, with V3 < V1. If the mechanism 3 is, as described herein, a chain conveyor, the speed V3 is constant along the trajectory γ3.

Once that the bottles B have concluded their path along the trajectory γ3, they are located at the beginning of the trajectory γ5 and of the connection mechanism 5. In case of a mechanism 5 made as a belt conveyor with a rectilinear feeding direction (rectilinear trajectory γ5), the bottles B do not undergo further deviations but simply run along the rectilinear portion undergoing a second reduction in speed from V3 to V5, with V5 ≤ V3 < V1, thereby providing a further gradual slowing down of the bottles B. Even in this case the speed V5 is constant along all of the trajectory γ5.

Following the movement along the trajectory γ5, in the portion comprised between the point of tangency with the trajectories γ3 and γ4, the bottles B are received by the second diverter mechanism 4 that provides a feeding thereof with a second gradual deviation along the trajectory γ4, that brings the bottles from a condition of advancement along the trajectory γ5 to a condition of advancement along the trajectory γ2, with the trajectory γ4 serving as connection trajectory similar to the trajectory γ3. At the same time, the mechanism 4 provides a third reduction in speed from V5 to V4, with V4 < V5 < V3 < V1, thereby determining a further slowing down of the bottles B.

Preferably, when the connection trajectory γ5 is tangent to the sole trajectory γ4, the condition V5 = V3 applies. This corresponds to having a zero speed step at the interface between the trajectories γ3 and γ5, that - being incident instead of tangent - may trigger impulsive phenomena on the articles B, which are countered -precisely- by making the speed par to that of the previous portion. On the contrary, at the interface with the trajectory γ4 the speeds step is more marked, but the tangency condition already per se helps in preventing impulsive phenomena, so that it is possible to tolerate more marked variations in speed.

Again preferably, when - instead - the trajectory γ5 is tangent to both the trajectories γ3 and γ4, then preferably the condition V5 < V3 applies: in such case a speed step in correspondence of both the interfaces owing to the double tangency condition may be tolerated.

Once that the bottles B conclude their path along the trajectory γ4, they are located at the beginning of the trajectory γ2 and the second conveyor 2. At the time of receiving the bottles B by the conveyor 2, they undergo a fourth and last reduction in speed from V4 to V2, with V2 < V4 <V5 < V3 < V1, thereby completing the gradual slowing down from the speed V1 to the speed V2.

The man skilled in the art will appreciate that the graduality in the speed reduction and the gentleness of the curvature of the overall trajectory considerably reduce the acceleration on the hollow glass articles B and eliminate also the need to provide belt conveyors serving as trajectory keepers, as instead required by the known solution reviewed at the beginning of this disclosure.

The inventors have furthermore observed that even better results in terms of reduction of accelerations of the hollow glass articles B may be obtained when the trajectories γ3 and γ4 are tangent both to the trajectory γ5, and to the respective trajectories γ1 and γ2, so as to define a sole connection arch between the conveyors 1 and 2 that develops harmoniously and substantially without interruptions (that is, without angles).

The transfer unit T according to the invention is furthermore adaptable to a plurality of different hollow glass articles simply by varying the feeding equipment of the mechanisms 3 and 4 (for example by replacing the blades BD3 and BD4, or by varying the spacing thereof).

Furthermore, the extreme feasibility of the solution described and illustrated herein allows to devise further variants wherein, for example, the connection mechanism 5 defines a connection trajectory γ5 corresponding to the envelope of curvilinear feeding trajectories of plural subsequent mechanisms, for example two or three transfer mechanisms for hollow glass articles arranged in sequential positions and integrated to form the connection mechanism 5. This means that, depending on the needs, it is possible to modulate the shape of the connection portion between the conveyors 1 and 2 simply by observing the tangency condition between the overall trajectory γ5 and the trajectories γ3 and γ4 associated to the diverter mechanisms 3 and 4.

Of course, the constructional of details and the embodiments may be widely varied with respect to what described and illustrated herein without by this departing from the scope of protection of the present invention, as defined by the appended claims.

## Claims

1. A transfer unit (T) of hollow glass articles (B) from a first conveyor (1) having a first feeding direction (γ1) and a first feeding speed (V1) to a second conveyor (2) having a second feeding direction (γ2) and a second feeding speed (V2), wherein the first feeding direction (γ1) and the second feeding direction (γ2) are incident to one another, preferably orthogonal, and a second feeding speed (V2) is lower than the first feeding speed (V1), the unit including:
- a first diverter mechanism (3, C3) configured to receive a plurality of hollow glass articles (B) from said first conveyor (1) and to feed said hollow glass articles (B) along a first curvilinear trajectory (γ3) that provides a first deviation of said hollow glass articles (B), said first diverter mechanism (3, C3) having, during use, a third feeding speed (V3) lower than said first feeding speed (V1),
- a second diverter mechanism (4, C4) configured to feed said plurality of hollow glass articles (B) along a second curvilinear trajectory (γ4) that provides a second deviation of said hollow glass articles (B) and to feed of said plurality of hollow glass articles (B) to the inlet of said second conveyor (2), said second diverter mechanism (4) having, during use, a fourth feeding speed (V4) higher than said second feeding speed (V2),
- a connection mechanism (5) configured to feed a plurality of hollow glass articles (B) from said first diverter mechanism (3) to said second diverter mechanism (4) along a connection trajectory (γ5) that connects said first curvilinear trajectory (γ3) to said second curvilinear trajectory (γ4) thereby enabling, during operation of the unit (T), a transfer of said plurality of hollow glass articles (B) from said first diverter mechanism (3) to said second diverter mechanism (4), said connection mechanism (5) having, during use, a fifth feeding speed (V5),
wherein furthermore:
- the fourth feeding speed (V4) is lower than the fifth feeding speed (V5),
- the fifth feeding speed (V5) is lower or equal to the third feeding speed (V3).

2. The transfer unit (T) according to Claim 1, wherein the connection trajectory (γ5) is tangent to at least one of said first curvilinear trajectory (γ3) and second curvilinear trajectory (γ4).

3. The transfer unit (T) according to Claim 1, wherein the connection trajectory (γ5) is tangent to said first curvilinear trajectory (γ3) and to said second curvilinear trajectory (γ4).

4. The transfer unit (T) according to any of Claims 1 to 3, wherein the connection trajectory (γ5) is a rectilinear trajectory.

5. The transfer unit (T) according to any of Claims 1 to 3, wherein the connection trajectory (γ5) is a curvilinear trajectory.

6. The transfer unit (T) according to Claim 5, wherein the connection trajectory (γ5) is a curvilinear trajectory resulting from the envelope of subsequent curvilinear trajectories associated to transfer mechanisms of hollow glass articles (B) arranged in sequential positions and integrated to form the connection mechanism (5).

7. The transfer unit (T) according to Claim 1, wherein the first curvilinear trajectory (γ3) is furthermore tangent to the first feeding direction (γ1) of said first conveyor (1).

8. The transfer unit (T) according to Claim 1 or Claim 7, wherein said second curvilinear trajectory (γ4) is furthermore tangent to the second feeding trajectory (γ2) of said second conveyor (2).

9. The transfer unit (T) according to Claim 1, wherein said first diverter mechanism (3) is a chain conveyor (C3) including a chain (C3) driven by means of a motored pinion on which it is engaged, and wound on a plurality of gear wheels to form a first closed path, wherein a portion of said closed path has a geometry defining said first curvilinear trajectory (γ3).

10. The transfer unit (T) according to Claim 1 or Claim 9, wherein said second diverter mechanism (4) is a chain conveyor (C4) including a chain (C4) driven by means of a motored pinion on which it is engaged, and wound on a plurality of gear wheels to form a second closed path, wherein a portion of said second closed path has a geometry defining said second curvilinear trajectory (γ4).

11. The transfer unit (T) according to Claim 1, wherein the first curvilinear trajectory (γ3) and/or the second curvilinear trajectory (γ4) have a constant curvature.

12. The transfer unit (T) according to Claim 1, wherein the first curvilinear trajectory (γ3) and/or the second curvilinear trajectory (γ4) have a variable curvature.

## Patentansprüche

1. Übergabeeinheit (T) für Hohlglasartikel (B) von einem ersten Förderband (1) mit einer ersten Transportrichtung (γ1) und einer ersten Transportgeschwindigkeit (V1) an ein zweites Förderband (2) mit einer zweiten Transportrichtung (γ2) und einer zweiten Transportgeschwindigkeit (V2), wobei die erste Transportrichtung (γ1) und die zweite Transportrichtung (γ2) in einem Winkel zueinander liegen, bevorzugt orthogonal, und eine zweite Transportgeschwindigkeit (V2) geringer ist als die erste Transportgeschwindigkeit (V1), wobei die Einheit Folgendes umfasst:
- einen ersten Umlenkmechanismus (3, C3), der dafür ausgelegt ist, eine Vielzahl von Hohlglasartikeln (B) von dem ersten Förderband (1) zu empfangen und die Hohlglasartikel (B) entlang eines ersten Kurvenbahnverlaufs (γ3) zu transportieren, der eine erste Ablenkung der Hohlglasartikel (B) gewährleistet, wobei der erste Umlenkmechanismus (3, C3) während der Verwendung eine dritte Transportgeschwindigkeit (V3) aufweist, die geringer ist als die erste Transportgeschwindigkeit (V1),
- einen zweiten Umlenkmechanismus (4, C4), der dafür ausgelegt ist, die Vielzahl von Hohlglasartikeln (B) entlang eines zweiten Kurvenbahnverlaufs (γ4) zu transportieren, der eine zweite Ablenkung der Hohlglasartikel (B) gewährleistet, und die Vielzahl von Hohlglasartikeln (B) zum Einlass des zweiten Förderbands (2) zu transportieren, wobei der zweite Umlenkmechanismus (4) während der Verwendung eine vierte Transportgeschwindigkeit (V4) aufweist, die höher ist als die zweite Transportgeschwindigkeit (V2),
- einen Verbindungsmechanismus (5), der dafür ausgelegt ist, eine Vielzahl von Hohlglasartikeln (B) von dem ersten Umlenkmechanismus (3) zu dem zweiten Umlenkmechanismus (4) entlang eines Verbindungsbahnverlaufs (γ5) zu transportieren, der den ersten Kurvenbahnverlauf (γ3) mit dem zweiten Kurvenbahnverlauf (γ4) verbindet und dadurch während des Betriebs der Einheit (T) eine Übergabe der Vielzahl von Hohlglasartikeln (B) von dem ersten Umlenkmechanismus (3) an den zweiten Umlenkmechanismus (4) ermöglicht, wobei der Verbindungsmechanismus (5) während der Verwendung eine fünfte Transportgeschwindigkeit (V5) aufweist,
wobei ferner:
- die vierte Transportgeschwindigkeit (V4) geringer ist als die fünfte Transportgeschwindigkeit (V5),
- die fünfte Transportgeschwindigkeit (V5) geringer als die oder gleich der dritten Transportgeschwindigkeit (V3) ist.

2. Übergabeeinheit (T) nach Anspruch 1, wobei der Verbindungsbahnverlauf (γ5) tangential zu dem ersten Kurvenbahnverlauf (γ3) und/oder dem zweiten Kurvenbahnverlauf (γ4) liegt.

3. Übergabeeinheit (T) nach Anspruch 1, wobei der Verbindungsbahnverlauf (γ5) tangential zu dem ersten Kurvenbahnverlauf (γ3) und dem zweiten Kurvenbahnverlauf (γ4) liegt.

4. Übergabeeinheit (T) nach einem der Ansprüche 1 bis 3, wobei es sich bei dem Verbindungsbahnverlauf (γ5) um einen geradlinigen Bahnverlauf handelt.

5. Übergabeeinheit (T) nach einem der Ansprüche 1 bis 3, wobei es sich bei dem Verbindungsbahnverlauf (γ5) um einen Kurvenbahnverlauf handelt.

6. Übergabeeinheit (T) nach Anspruch 5, wobei es sich bei dem Verbindungsbahnverlauf (γ5) um einen Kurvenbahnverlauf handelt, der aus der Hüllkurve aufeinanderfolgender Kurvenbahnverläufe resultiert, die zu Übergabemechanismen für Hohlglasartikel (B) gehören, welche an hintereinanderliegenden Positionen angeordnet und so integriert sind, dass sie den Verbindungsmechanismus (5) bilden.

7. Übergabeeinheit (T) nach Anspruch 1, wobei der erste Kurvenbahnverlauf (γ3) ferner tangential zu der ersten Transportrichtung (γ1) des ersten Förderbands (1) liegt.

8. Übergabeeinheit (T) nach Anspruch 1 oder Anspruch 7, wobei der zweite Kurvenbahnverlauf (γ4) ferner tangential zu dem zweiten Transportbahnverlauf (γ2) des zweiten Förderbands (2) liegt.

9. Übergabeeinheit (T) nach Anspruch 1, wobei es sich bei dem ersten Umlenkmechanismus (3) um einen Kettenförderer (C3) handelt, der eine Kette (C3) beinhaltet, die durch ein motorgetriebenes Ritzel angetrieben wird, an dem diese eingreift, und so um eine Vielzahl von Zahnrädern gewunden ist, dass sie einen ersten geschlossenen Weg bildet, wobei ein Abschnitt des geschlossenen Wegs eine den ersten Kurvenbahnverlauf (γ3) definierende Geometrie aufweist.

10. Übergabeeinheit (T) nach Anspruch 1 oder Anspruch 9, wobei es sich bei dem zweiten Umlenkmechanismus (4) um einen Kettenförderer (C4) handelt, der eine Kette (C4) beinhaltet, die durch ein motorgetriebenes Ritzel angetrieben wird, an dem diese eingreift, und so um eine Vielzahl von Zahnrädern gewunden ist, dass sie einen zweiten geschlossenen Weg bildet, wobei ein Abschnitt des zweiten geschlossenen Wegs eine den zweiten Kurvenbahnverlauf (γ4) definierende Geometrie aufweist.

11. Übergabeeinheit (T) nach Anspruch 1, wobei der erste Kurvenbahnverlauf (γ3) und/oder der zweite Kurvenbahnverlauf (γ4) eine konstante Kurvenform aufweisen.

12. Übergabeeinheit (T) nach Anspruch 1, wobei der erste Kurvenbahnverlauf (γ3) und/oder der zweite Kurvenbahnverlauf (γ4) eine veränderliche Kurvenform aufweisen.

## Revendications

1. Unité de transfert (T) d'articles en verre creux (B) d'un premier transporteur (1) ayant une première direction d'acheminement (γ1) et une première vitesse d'acheminement (V1) à un deuxième transporteur (2) ayant une deuxième direction d'acheminement (γ2) et une deuxième vitesse d'acheminement (V2), où la première direction d'acheminement (γ1) et la deuxième direction d'acheminement (γ2) sont incidentes l'une vers l'autre, de préférence orthogonales, et une deuxième vitesse d'acheminement (V2) est inférieure à la première vitesse d'acheminement (V1), l'unité comportant :
- un premier mécanisme de déviation (3, C3) configuré pour recevoir une pluralité d'articles en verre creux (B) à partir dudit premier transporteur (1) et pour acheminer lesdits articles en verre creux (B) le long d'une première trajectoire curviligne (γ3) qui assure une première déviation desdits articles en verre creux (B), ledit premier mécanisme de déviation (3, C3) ayant, pendant l'utilisation, une troisième vitesse d'acheminement (V3) inférieure à ladite première vitesse d'acheminement (V1),
- un deuxième mécanisme de déviation (4, C4) configuré pour acheminer ladite pluralité d'articles en verre creux (B) le long d'une deuxième trajectoire curviligne (γ4) qui assure une deuxième déviation desdits articles en verre creux (B) et pour acheminer ladite pluralité d'articles en verre creux (B) à l'entrée dudit deuxième transporteur (2), ledit deuxième mécanisme de déviation (4) ayant, pendant l'utilisation, une quatrième vitesse d'acheminement (V4) supérieure à ladite deuxième vitesse d'acheminement (V2),
- un mécanisme de liaison (5) configuré pour acheminer une pluralité d'articles en verre creux (B) dudit premier mécanisme de déviation (3) vers ledit deuxième mécanisme de déviation (4) le long d'une trajectoire de liaison (γ5) qui relie ladite première trajectoire curviligne (γ3) à ladite deuxième trajectoire curviligne (γ4) permettant ainsi, pendant le fonctionnement de l'unité (T), un transfert de ladite pluralité d'articles en verre creux (B) dudit premier mécanisme de déviation (3) audit deuxième mécanisme de déviation (4), ledit mécanisme de liaison (5) ayant, pendant l'utilisation, une cinquième vitesse d'acheminement (V5),
dans laquelle en outre :
- la quatrième vitesse d'acheminement (V4) est inférieure à la cinquième vitesse d'acheminement (V5),
- la cinquième vitesse d'acheminement (V5) est inférieure ou égale à la troisième vitesse d'acheminement (V3).

2. Unité de transfert (T) selon la revendication 1, dans laquelle la trajectoire de liaison (γ5) est tangente à au moins l'une desdites première trajectoire curviligne (γ3) et deuxième trajectoire curviligne (γ4).

3. Unité de transfert (T) selon la revendication 1, dans laquelle la trajectoire de liaison (γ5) est tangente à ladite première trajectoire curviligne (γ3) et à ladite deuxième trajectoire curviligne (γ4).

4. Unité de transfert (T) selon l'une des revendications 1 à 3, dans laquelle la trajectoire de liaison (γ5) est une trajectoire rectiligne.

5. Unité de transfert (T) selon l'une des revendications 1 à 3, dans laquelle la trajectoire de liaison (γ5) est une trajectoire curviligne.

6. Unité de transfert (T) selon la revendication 5, dans laquelle la trajectoire de liaison (γ5) est une trajectoire curviligne résultant de l'ensemble de trajectoires curvilignes subséquentes associées à des mécanismes de transfert d'articles en verre creux (B) agencés dans des positions séquentielles et intégrés pour former le mécanisme de liaison (5).

7. Unité de transfert (T) selon la revendication 1, dans laquelle la première trajectoire curviligne (γ3) est en outre tangente à la première direction d'acheminement (γ1) dudit premier transporteur (1).

8. Unité de transfert (T) selon la revendication 1 ou 7, dans laquelle ladite deuxième trajectoire curviligne (γ4) est en outre tangente à la deuxième trajectoire d'acheminement (γ2) dudit deuxième transporteur (2).

9. Unité de transfert (T) selon la revendication 1, dans laquelle ledit premier mécanisme de déviation (3) est un transporteur à chaîne (C3) comportant une chaîne (C3) entraînée au moyen d'un pignon moteur sur lequel elle est engagée, et enroulée sur une pluralité de roues dentées pour former un premier trajet fermé, où une partie dudit trajet fermé a une géométrie définissant ladite première trajectoire curviligne (γ3).

10. Unité de transfert (T) selon la revendication 1 ou 9, dans laquelle ledit deuxième mécanisme de déviation (4) est un transporteur à chaîne (C4) comportant une chaîne (C4) entraînée au moyen d'un pignon moteur sur lequel elle est engagée, et enroulée sur une pluralité de roues dentées pour former un deuxième trajet fermé, où une partie dudit deuxième trajet fermé a une géométrie définissant ladite deuxième trajectoire curviligne (γ4).

11. Unité de transfert (T) selon la revendication 1, dans laquelle la première trajectoire curviligne (γ3) et/ou la deuxième trajectoire curviligne (γ4) a/ont une courbure constante.

12. Unité de transfert (T) selon la revendication 1, dans laquelle la première trajectoire curviligne (γ3) et/ou la deuxième trajectoire curviligne (γ4) a/ont une courbure variable.
